# EUROPEAN PATENT APPLICATION

(11) **EP 4 030 094 A1**
(43) Date of publication of application: **20.07.2022**
(21) Application number: 20936071.8
(22) Date of filing: 27.11.2020
(51) Int. Cl.: F16M 11/22

(54) **MOBILE TERMINAL VERTICAL SUPPORT**

(71) Applicant: Shenzhen Xfanic Technology Co., Ltd., Shenzhen, Guangdong 518000 (CN)
(72) Inventor: LIU, Xiangping, Guangdong 518000 (CN); ZHUO, Sizhi, Guangdong 518000 (CN)
(74) Representative: Petraz, Gilberto Luigi
(86) International application number: PCT/CN2020/132259
(87) International publication number: WO 2022/110016

(57) **Abstract**

Disclosed is a vertical stand for mobile terminals (100), which includes: a base (10), a movable base (20), and a supporting frame (30). The base (10) includes a first blocking plate (11). The movable base (20) is arranged on the base (10) and includes a second blocking plate (21) and a first protrusion (22), a clamping groove (23) for placing a tablet computer (200) is formed between the second blocking plate (21) and the first blocking plate (11), and a placing groove (24) for placing a mobile phone (300) is formed between the second blocking plate (21) and the first protrusion (22). A first end of the supporting frame (30) is connected to a bottom surface of the base (10), and a second end of the supporting frame (30) is provided with a second protrusion (31), so that the supporting frame (30), the first blocking plate (11) and/or the second blocking plate (21) are able to support a laptop computer (400) together. The vertical stand is multifunctional, and may be used in different scenarios for supporting mobile phones (300), tablet computers (200), laptop computers (400), and the like, by combining the base (10), the movable base (20), and the supporting frame (30).

## Description

### TECHNICAL FIELD

The present disclosure relates to the technical field of electronic devices, and in particular, to a vertical stand for mobile terminals.

### BACKGROUND

Mobile terminals, also called mobile communication terminals, refer to portable computer equipment. Common mobile terminals include mobile phones, tablet computers, and laptop computers. A stand is often used to support a mobile terminal when using mobile terminals such as mobile phones, tablet computers, and laptop computers, so that users can watch movies, type, charge, and transmit data.

However, a mobile phone holder is needed when supporting mobile phones, a tablet holder is needed for supporting tablets, and a laptop stand is needed for supporting laptops. Different stands and holders are required to support mobile terminals under different scenarios, and each stand has limited function, which brings inconvenience to users.

### SUMMARY

### Technical problem

An objective of the embodiments of the present disclosure is to provide a vertical stand for mobile terminals, aiming to solve the problems of limited function and working scenarios of a stand.

### Technical proposals

In order to solve the above-mentioned problems, embodiments of the present disclosure include:
In a first aspect, a vertical stand for mobile terminals is provided, which includes: a base, a movable base, and a supporting frame;
the base includes a first blocking plate;
the movable base is arranged on the base and includes a second blocking plate and a first protrusion, a clamping groove for placing a tablet computer is formed between the second blocking plate and the first blocking plate, and a placing groove for placing a mobile phone is formed between the second blocking plate and the first protrusion;
a first end of the supporting frame is connected to a bottom surface of the base, and a second end of the supporting frame is provided with a second protrusion, so that the supporting frame, the first blocking plate and/or the second blocking plate are able to support a laptop computer together.

In an embodiment, a height of the first blocking plate is greater than a height of the second blocking plate, and the height of the second blocking plate is greater than a height of the supporting frame.

In an embodiment, a first protecting cover is provided at a top end of the first blocking plate, and the first protecting cover has a first edge protecting layer, and the first edge protecting layer is fitted on a side face of the first blocking plate near the second blocking plate.

In an embodiment, a first non-slip pad is arranged on the bottom surface of the base.

In an embodiment, a first slide rail is provided on a face of the base in contact with the movable base, and a first slider is provided on a face of the movable base in contact with the base. The first slider and the first slide rail are slidably connected, so that a width of the clamping groove can be changed by adjusting a position of the movable base.

In an embodiment, a second protecting cover is provided at a top end of the second blocking plate, and the second protecting cover has a second edge protecting layer, and the second edge protecting layer is fitted on a side face of the second blocking plate near the first blocking plate.

In an embodiment, a first inclined surface is provided at a top end of the first protecting cover, and a second inclined surface is provided at a top end of the second protecting cover.

In an embodiment, the first protrusion has a second non-slip pad located on a side of the first protrusion near the second blocking plate.

In an embodiment, a shaft hole is provided on the first end of the supporting frame, and a first rotating shaft is provided on the bottom surface of the base, and the first end of the supporting frame is sleeved on the first rotating shaft through the shaft hole, so that the supporting frame can be extended from or retracted to the bottom surface of the base.

In an embodiment, the supporting frame includes a first support, a second support, and a second rotating shaft, and the first support is movably connected with the second support through the second rotating shaft.

In an embodiment, the second end of the supporting frame is provided with an avoidance hole and a third rotating shaft, the third rotating shaft is located in the avoidance hole, and the second protrusion is movably connected with the third rotating shaft, so that the second protrusion can be received in or protruded from the avoidance hole.

In an embodiment, the second end of the supporting frame is provided with a third non-slip pad located on an upper surface of the supporting frame.

In an embodiment, the vertical support for mobile terminals includes a hub, the hub is mounted on the base and is positioned on a side of the first blocking plate away from the second blocking plate.

In an embodiment, the hub includes a housing, a cover plate, a circuit board, and a plurality of female connectors, the housing is fixedly connected to the base, the cover plate covers on the housing, and the circuit board is mounted inside the housing, the plurality of female connectors are each in electrical connection with the circuit board, and a connecting terminal of each of the plurality of female connectors is exposed outside the housing.

In an embodiment, the plurality of female connectors include at least two of a USB interface, a video-graphics-array interface, a high-definition multimedia interface, a Type-c interface, a lightning interface, a secure digital card interface, a trans-flash (TF) card interface, and a Ethernet interface.

In an embodiment, a second slider is provided on the first end of the supporting frame, and a second slide rail is provided on the bottom surface of the base, the second slider is slidably connected with the second slide rail, so that the supporting frame can be extended from or retracted to the bottom surface of the base.

In an embodiment, a limiting bar is provided on the first end of the supporting frame, and a guiding hole is provide in the base, and the supporting frame is able to be extended from or retracted into the guiding hole.

In an embodiment, an avoidance groove is provided on an edge at an opening of the guiding hole, so that the second protrusion is accommodated in the avoidance groove when the supporting frame is in a retracted state.

In an embodiment, the vertical stand for mobile terminals further includes an electrical mechanism, and the electrical mechanism includes a driving member and a transmission member. A movable hole is provided in the base. The driving member is mounted in the housing, and one end of the transmission member is connected with the driving member, and the other end thereof passes through the movable hole and is connected to the movable base, such that the driving member can drive the second blocking plate of the movable base to move toward or away from the first blocking plate. Advantageous effects

The vertical stand for mobile terminals provided by the present disclosure is multifunctional, and may be used in different scenarios for supporting mobile phones, tablet computers, laptop computers, and the like, by combining the base, the movable base, and the supporting frame.

### BRIEF DESCRIPTION OF THE DRAWINGS

In order to more clearly illustrate the technical proposals of the embodiments of the present disclosure, the drawings used in the description of the embodiments will be briefly described below. Obviously, the drawings in the following description are some embodiments of the present disclosure, one of ordinary skill in the art, without any creative effort, can obtain other drawings based on these drawings.
Fig. 1 is a perspective view of a vertical stand for mobile terminals according to a first embodiment of the present disclosure;
Fig. 2 is a schematic diagram of the vertical stand for mobile terminals shown in Fig. 1 in a state of supporting a tablet computer;
Fig. 3 is a schematic diagram of the vertical stand for mobile terminals shown in Fig. 1 in a state of supporting a phone;
Fig. 4 is a schematic diagram of the vertical stand for mobile terminals shown in Fig. 1 in a state of supporting a laptop computer;
Fig. 5 is a bottom view of the vertical stand for mobile terminals shown in Fig. 1;
Fig. 6 is a cross-sectional view taken along line A-A in Fig. 5;
Fig. 7 is an enlarged view of area B in Fig. 6;
Fig. 8 is an enlarged view of area C in Fig. 6;
Fig. 9 is a partially structural view of a vertical stand for mobile terminals according to a second embodiment of the present disclosure;
Fig. 10 is a partially structural view of a vertical stand for mobile terminals according to a third embodiment of the present disclosure; and
Fig. 11 is a partially structural view of a vertical stand for mobile terminals according to a fourth embodiment of the present disclosure.

### DETAILED DESCRIPTION OF THE EMBODIMENTS

In order to make the above objectives, features, and advantages of the present disclosure more obvious and understandable, the present disclosure will be further described in detail below in conjunction with the accompanying drawings and detailed embodiments. It should be understood that the detailed embodiments described here are merely for explaining the present disclosure, and are not intended to limit the present disclosure.

It should be understood that, when a component is referred to as being "provided on" or "fixed to" another component, it may be directly or indirectly on the other component; when a component is referred to as being "connected to" another component, it may be directly or indirectly connected to the other component. The orientation or positional relationship indicated by the terms "top", "bottom", "left", "right", etc. is based on the orientation or positional relationship shown in the drawings, and is merely for descriptive purpose to the disclosure, and does not indicate or imply that the device or element referred to must have a specific orientation, nor be configured and operated in a specific orientation. Therefore, it cannot be understood as a limitation on the present disclosure. For those of ordinary skill in the art, the specific meaning of the above-mentioned terms may be understood according to specific circumstances. In addition, the terms "first" and "second" are used for descriptive purposes only, and cannot be understood as indicating or implying relative importance or implicitly indicating the number of technical features referred to. In the description of the present disclosure, the meaning of "plurality" is two or more, unless otherwise specified.

In order to illustrate the technical proposals described in the present disclosure, the present disclosure will be described in detail below in conjunction with drawings and detailed embodiments.

### Embodiment 1

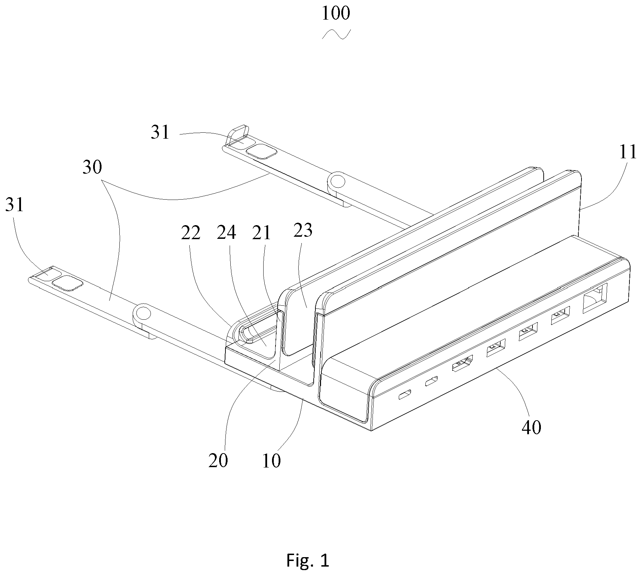

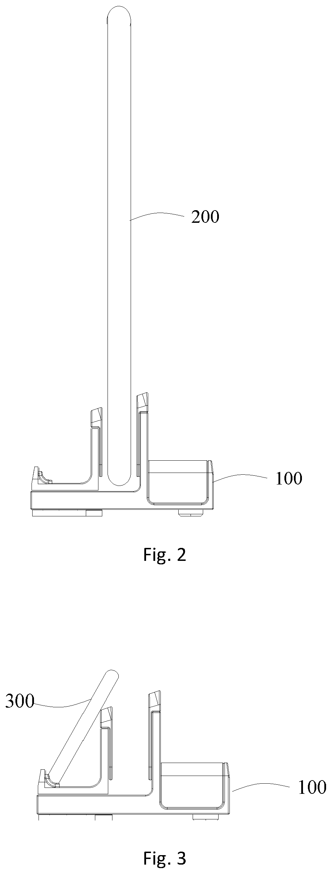

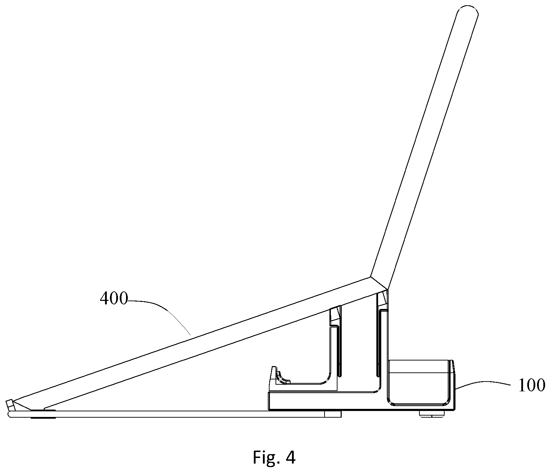

A vertical stand for mobile terminals 100 provided in the first embodiment of the present application will now be described referring to Figs. 1 to 4. The vertical stand for mobile terminals 100 includes a base 10, a movable base 20 and a supporting frame 30.

The base 10 includes a first blocking plate 11. The movable base 20 is arranged on the base 10 and includes a second blocking plate 21 and a first protrusion 22. A clamping groove 23 for placing a tablet computer 200 is formed between the second blocking plate 21 and the first blocking plate 11, and a placing groove 24 for placing a mobile phone 300 is formed between the second blocking plate 21 and the first protrusion 22. A first end of the supporting frame 30 is connected to a bottom surface of the base 10, and a second end of the supporting frame 30 is provided with a second protrusion 31, so that the supporting frame 30, the first blocking plate 11, and/or the second blocking plate 21 are able to support a laptop computer 400 together.

Since the tablet computer 200 has a certain thickness, the frame of the tablet computer 200 can be clamped by the clamping groove 23 so that the tablet computer 200 can be held in the clamping groove 23 for the user to use. The placing groove 24 can be used for placing the mobile phone 300, with the second blocking plate 21 supporting behind the mobile phone 300 so that the mobile phone 300 is placed on the movable base 20 in an inclined state. At the same time, the first protrusion 22 can block on a side of the movable base 20 which is in contact with the mobile phone 300 to prevent the mobile phone 300 from sliding, so that the mobile phone 300 remains in the inclined state to ensure a comfortable viewing angle between the user and the screen of the mobile phone 300, thereby improving user experience. In addition, since the laptop computer 400 is relatively large with a computer part and a screen part, by supporting the laptop computer 400 using the supporting frame 30, the first blocking plate 11 and/or the second blocking plate 21 together, the weight of the laptop computer 400 may be dispersed, which improves the stability of the laptop computer 400. At the same time, the second protrusion 31 can block on a side of the supporting frame 30 which is in contact with the laptop computer 400 to prevent laptop computer 400 from sliding, so that laptop computer 400 remains in the inclined state for the ease of typing, and ensuring a comfortable viewing angle between the user and the screen of the laptop computer 400 which improves user experience.

In order to better explain the technical proposals of the present disclosure, three common mobile terminals, such as a mobile phone 300, a tablet computer 200, and a laptop computer 400, are listed herein as examples of the vertical stand for mobile terminals 100, but are not limited thereto. For example, a tutoring device and other mobile terminals similar to the tablet computer 200 can be placed in the clamping groove 23, and a handheld game console and other mobile terminals similar to the mobile phone 300 can be placed in the placing groove 24. Any modification, equivalent substitution and improvement made within the spirit and principles of this application shall fall within the scope of protection of the present application.

The vertical stand for mobile terminals 100 provided by the present disclosure is multifunctional, and may be used in different scenarios for supporting the mobile phone 300, the tablet computer 200, the laptop computer 400, and the like, by combining the base 10, the movable base 20, and the supporting frame 30.

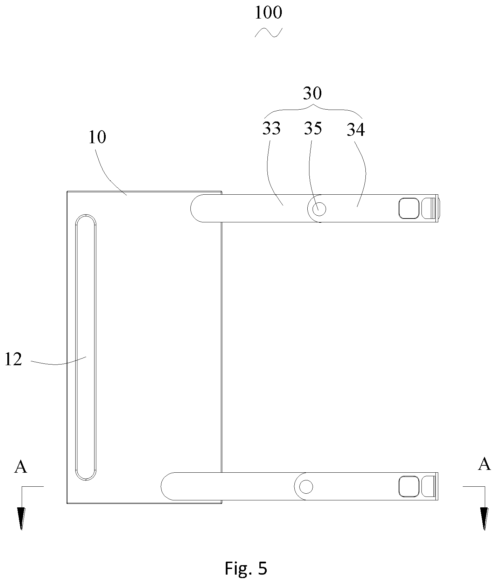

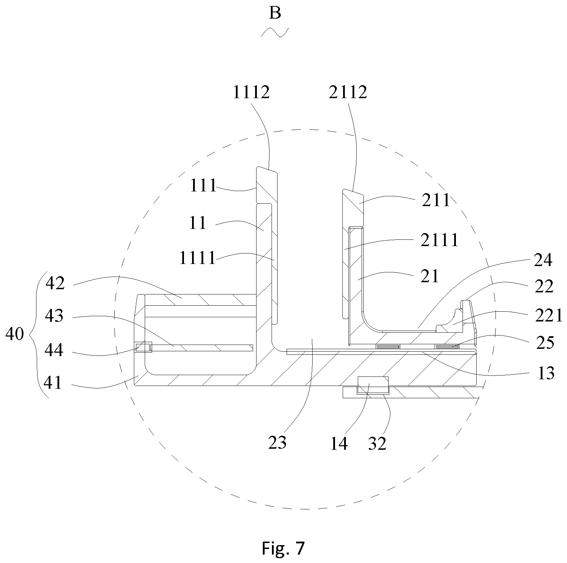

Referring to Figs. 5 to 7, in this embodiment, a height of the first blocking plate 11 is greater than a height of the second blocking plate 21, and the height of the second blocking plate 21 is greater than a height of the supporting frame 30. When the laptop computer 400 is placed on the vertical stand for mobile terminals 100, the supporting frame 30, the first blocking plate 11 and the second blocking plate 21 support the laptop computer 400 together, and contact points with the first blocking plate 11, the second blocking plate 21 and the supporting frame 30 are in a straight line, which may further disperse the weight of the laptop computer 400 and ensure the stability of the laptop computer 400 and the strength of the vertical stand even when the user is typing.

Referring to Figs. 5 to 7, in this embodiment, a first protecting cover 111 is provided at a top end of the first blocking plate 11, and the first protecting cover 111 has a first edge protecting layer 1111 fitted on a side face of the first blocking plate 11 near the second blocking plate 21. The first protecting cover 111 is preferably a soft non-slip material, such as non-slip rubber, leather, and the like. The first edge protecting layer 1111 may protect the mobile terminal such as the tablet computer 200 placed in the clamping groove 23, preventing the mobile terminal from being scratched, as well as increasing the friction with the mobile terminal to avoid the mobile terminal from accidentally slipping off.

Referring to Fig. 5, in this embodiment, a first non-slip pad 12 is located on the bottom surface of the base 10. The friction between the vertical stand for mobile terminals 100 and the desktop may be increased by arranging the first non-slip pad 12 on the bottom surface of the base 10, so that the mobile terminals can be more stable while avoiding scratching the desktop. The first protecting cover 111 is preferably a soft non-slip material, such as a silicone pad, non-slip rubber, leather, and the like, and a plurality of first non-slip pads 12 may be provided to improve the anti-slip effect.

Referring to Figs. 5 to 7, in this embodiment, a first slide rail 13 is provided on a face of the base 10 in contact with the movable base 20, and a first slider 25 is provided on a face of the movable base 20 in contact with the base 10. The first slider 25 and the first slide rail 13 are slidably connected, so that a width of the clamping groove 23 can be changed by adjusting a position of the movable base 20. It can be understood that since the thickness of the tablet computer 200 of different models is different, the tablet computer 200 of different thickness can be fitted in by adjusting the width of the clamping groove 23, which avoids that the clamping groove 23 is too small for the tablet computer 200, or the tablet computer 200 is unstable due to the clamping groove 23 being too large.

Referring to Figs. 5 to 7, in this embodiment, a second protecting cover 211 is provided at a top end of the second blocking plate 21, and the second protecting cover 211 has a second edge protecting layer 2111 fitted on a side face of the second blocking plate 21 near the first blocking plate 11. The second protecting cover 211 is preferably a soft non-slip material, such as non-slip rubber, leather, and the like. The second protecting cover 211 cooperates with the first protecting cover 111 to protect both sides of the tablet computer 200 placed in the clamping groove 23, as well as increases the friction with the mobile terminal such as the mobile phone 300 and the laptop computer 400 to avoid the mobile terminal from accidentally slipping off.

Referring to Figs. 5 to 7, in this embodiment, a top end of the first protecting cover 111 is provided with a first inclined surface 1112, and a top end of the second protecting cover 211 is provided with a second inclined surface 2112. The first inclined surface 1112 and the second inclined surface 2112 fit a bottom surface of the laptop computer 400 when it is placed on the vertical stand for mobile terminals 100 in an inclined orientation, so that the contact area is increased, thereby reducing the pressure, and ensuring the stability when using the laptop computer 400.

Referring to Figs. 5 to 7, in this embodiment, the first protrusion 22 has a second non-slip pad 221 located on a side of the first protrusion 22 near the second blocking plate 21. The second non-slip pad 221 is preferably a soft non-slip material, such as non-slip rubber, leather, and the like. The second non-slip pad 221 may protect the mobile phone 300 placed on the movable base 20, preventing the mobile phone 300 from being scratched, as well as increasing the friction to avoid the mobile phone 300 from accidentally slipping off.

Referring to Figs. 5 to 7, in this embodiment, the first end of the supporting frame 30 is provided with a shaft hole 32, the bottom surface of the base 10 is provided with a first rotating shaft 14, and the first end of the supporting frame 30 is sleeved on the first rotating shaft 14 through the shaft hole 32, such that the supporting frame 30 can be extended from or retracted to the bottom surface of the base 10. When laptop computer 400 is to be placed on supporting frame 30, the supporting frame 30 can be rotated and extended from the bottom surface of the base 10; and when the supporting frame 30 is not in use, the supporting frame 30 can be rotated again to be stored on the bottom surface of the base 10, this may reduce the space and is easy to carry. Preferably, the number of the supporting frames 30 is two, and the laptop computer 400 may be more stably supported by two supporting frames 30 at the same time.

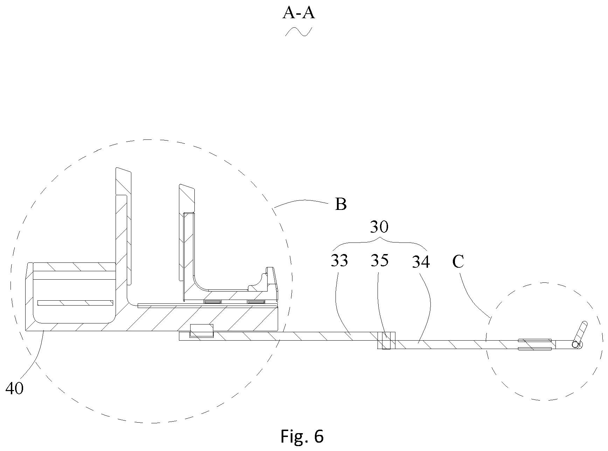

Referring to Figs. 5 and 6, in this embodiment, the supporting frame 30 includes a first support 33, a second support 34, and a second rotating shaft 35, and the first support 33 is movably connected to the second support 34 through the second rotating shaft 35. The supporting frame 30 may be inconvenient to rotate and store on the bottom surface of the base 10 when the supporting frame 30 is too long or the number thereof is too many. However, since the first support 33 and the second support 34 are movably connected through the second rotating shaft 35, the supporting frame 30 can be folded first to reduce the length thereof, and then the supporting frame 30 can be rotated around the first rotating shaft 14 to be stored on the bottom surface of the base 10.

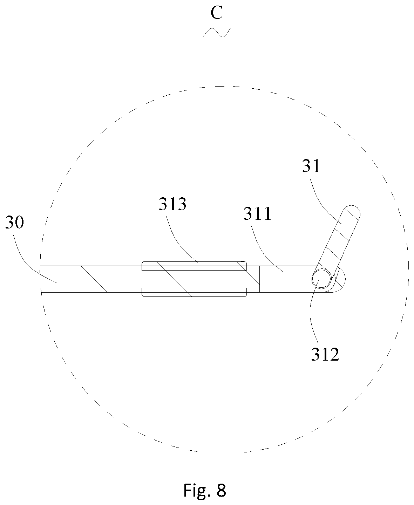

Referring to Figs. 5, 6 and 8, in this embodiment, the second end of the supporting frame 30 is provided with an avoidance hole 311 and a third rotating shaft 312, the third rotating shaft 312 is located in the avoidance hole 311, and the second protrusion 31 is movably connected with the third rotating shaft 312, so that the second protrusion 31 can be received in or protruded from the avoidance hole 311. When the supporting frame 30 is retracted and rotated to the bottom surface of the base 10, the second protrusion 31 can be rotated and accommodated in the avoidance hole 311, thereby preventing the collision between the second protrusion 31 and the base 10 and saving space.

Referring to Figs. 5, 6 and 8, in this embodiment, the second end of the supporting frame 30 is provided with a third non-slip pad 313 located on an upper surface of the supporting frame 30. The second non-slip pad 221 is preferably a soft non-slip material, such as non-slip rubber, leather, and the like. The third non-slip pad 313 may protect the laptop computer 400 placed on the supporting frame 30, preventing the laptop computer 400 from being scratched, as well as increasing the friction to avoid the laptop computer 400 from accidentally slipping off.

Referring to Figs. 5 to 7, in this embodiment, the vertical support for mobile terminals 100 includes a hub 40, and the hub 40 is mounted on the base 10 and is positioned on a side of the first blocking plate 11 away from the second blocking plate 21. It is to be noted that a hub functions as the center, the main function of the hub 40 is to regenerate, reshape, and amplify the received signal to expand the transmission distance of the network while concentrating all nodes on the hub 40 as a center node. By integrating the vertical stand for mobile terminals 100 with the hub 40, more ports for the mobile terminal placed on the vertical stand for mobile terminals 100 may be duplicated or even expanded, so that the mobile terminal can be integrally connected with multiple accessories or external devices (e.g. power adapter, network cable, mouse, external keyboard, printer and external monitor), to achieve the ease of using and carrying.

Referring to Figs. 5 to 7, in this embodiment, the hub 40 includes a housing 41, a cover plate 42, a circuit board 43, and a plurality of female connectors 44, the housing 41 is fixedly connected to the base 10, with the cover plate 42 covering on the housing 41 and the circuit board 43 mounted inside the housing 41, the plurality of female connectors 44 are each in electrical connection with the circuit board 43, and a connecting terminal of each of the plurality of female connectors 44 is exposed outside the housing 41. It is understandable that the housing 41 and the cover plate 42 protect the circuit board 43, and mobile terminals, accessories or external devices are connected through the plurality of female connectors 44. Preferably, the housing 41 and the base 10 are integrally connected, which helps to improve the stability of the connection between the hub 40 and the base 10, and facilitates manufacturing.

In this embodiment, the plurality of female connectors 44 include at least two of a USB interface, a video graphics array (VAG) interface, a high-definition multimedia interface (HDMI), a Type-c interface, a lightning interface for Apple products, a secure digital card interface, a trans-flash (TF) card interface, and a Ethernet interface. Through the above interfaces, different accessories or external devices may be connected to the mobile terminals for different scenarios thereby improving user experience. This embodiment lists several commonly used interfaces, but is not limited to the above-mentioned interfaces.

### Embodiment 2

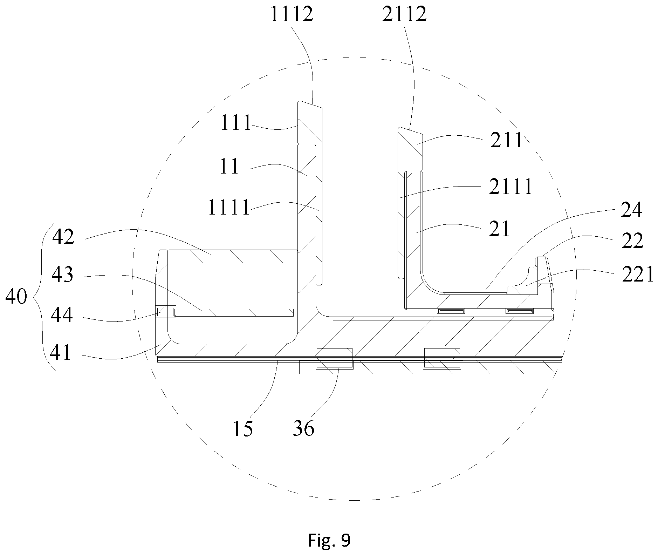

Referring to Fig. 9, the vertical stand for mobile terminals 100 provided in the second embodiment of the present disclosure will now be described. The vertical stand for mobile terminals 100 is basically the same as that provided in the first embodiment of the present disclosure.

The vertical stand for mobile terminals 100 provided in the present embodiment differs in that: a second slider 36 is provided at the first end of the supporting frame 30, and a second slide rail 15 is provided on the bottom surface of the base 10, and the second slider 36 is slidably connected with the second slide rail 15, so that the supporting frame 30 can be extended from or retracted to the bottom surface of the base 10. When the laptop computer 400 is to be placed on supporting frame 30, the supporting frame 30 can be extended from the bottom surface of the base 10 along the second slide rail 15; and when the supporting frame 30 is not in use, the supporting frame 30 can be retracted to the bottom surface of the base 10 along the second slide rail 15 again, this may reduce the space and is easy to carry. Preferably, the number of the supporting frames 30 is two, and the laptop computer 400 may be more stably supported by two supporting frames 30 at the same time.

### Embodiment 3

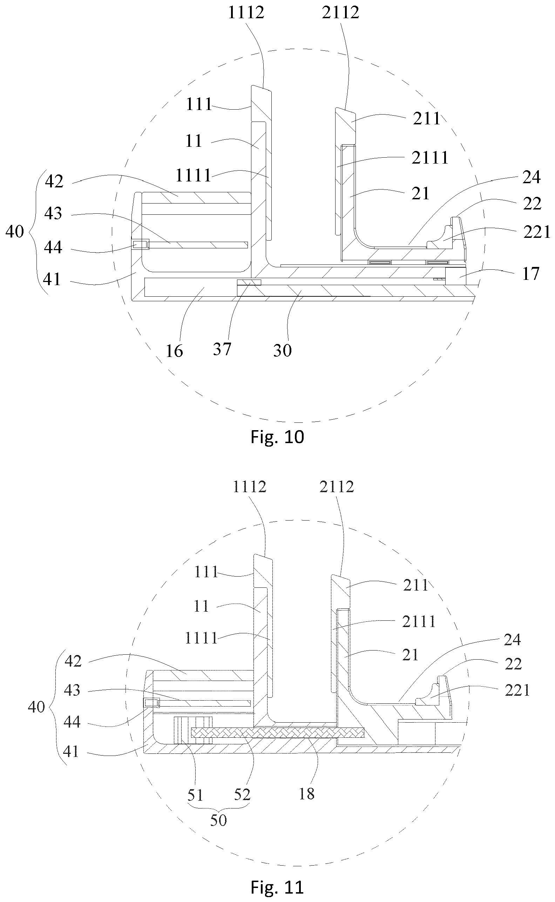

Referring to Fig. 10, the vertical stand for mobile terminals 100 provided in the third embodiment of the present disclosure will now be described. The vertical stand for mobile terminals 100 is basically the same as that provided in the first and second embodiments of the present disclosure.

The vertical stand for mobile terminals 100 provided in the present embodiment differs in that: a limiting bar 37 is provided on the first end of the supporting frame 30, and a guiding hole 16 is provide in the base 10. The supporting frame 30 can be extended from or retracted into the guiding hole 16. When the laptop computer 400 is to be placed on supporting frame 30, the supporting frame 30 is pulled out from the guiding hole 16, and the limiting bar 37 limits the supporting frame 30 to prevent the supporting frame 30 being drawn out completely from the guiding hole 16. When the supporting frame 30 is not in use, the supporting frame 30 can be pushed back to the guiding hole 16 and stored therein, this may reduce the space and is easy to carry. Preferably, the number of the supporting frames 30 is two, and the laptop computer 400 may be more stably supported by two supporting frames 30 at the same time.

Referring to Fig. 10, in this embodiment, an avoidance groove 17 is provided on an edge at an opening of the guiding hole 16, so that the second protrusion 31 can be accommodated in the avoidance groove 17 when the supporting frame 30 is in a retracted state. By providing the avoidance groove 17, the second protrusion 31 can be prevented from protruding out of the base 10 when the supporting frame 30 is in the retracted state, which may save space. Preferably, the avoidance groove 17 and the second protrusion 31 may be in snap connection or interference fitting, so that the supporting frame 30 cannot easily slip out of the guiding hole 16.

### Embodiment 4

Referring to Fig. 11, the vertical stand for mobile terminals 100 provided in the third embodiment of the present disclosure will now be described. The vertical stand for mobile terminals 100 is basically the same as that provided in the first, second, and third embodiments of the present disclosure.

The vertical stand for mobile terminals 100 provided in the present embodiment differs in that: the vertical stand for mobile terminals 100 further includes an electrical mechanism 50, and the electrical mechanism 50 includes a driving member 51 and a transmission member 52. A movable hole 18 is provided in the base 10. The driving member 51 is mounted in the housing 41, and one end of the transmission member 52 is connected with the driving member 51, and the other end thereof passes through the movable hole 18 and is connected to the movable base 20, such that the driving member 51 can drive the second blocking plate 21 of the movable base 20 to move toward or away from the first blocking plate 11. It can be understood that the second blocking plate 21 can be moved by the electrical mechanism 50, in order to adjust the width of the clamping groove 23, so that it is more convenient to use and adjust the vertical stand for mobile terminals 100, thereby improving user experience. Preferably, the driving member 51 includes a micro-motor and a gear, and the transmission member 52 is a rack which meshes with the gear. The gear is driven to rotate by the rotation of the micro-motor, and then controls the movement of the movable base 20 by driving the rack. At the same time, the movable hole 18 serves as a guide to improve the stability of the movable base 20 when moving. In addition, when the micro-motor rotates in a reverse direction, the movable base 20 also moves in the reverse direction.

The above are merely detailed embodiments of the present disclosure, but the protection scope of the present disclosure is not limited thereto. Other changes, equivalents and improvements obtained by those skilled in the art on the basis of the technical proposals and concepts described above shall fall within the scope of protection of the appended claims of the present disclosure.

## Claims

1. A vertical stand for mobile terminals, comprising: a base, a movable base, and a supporting frame;
the base having a first blocking plate;
the movable base being arranged on the base and having a second blocking plate and a first protrusion, a clamping groove for placing a tablet computer being formed between the second blocking plate and the first blocking plate, and a placing groove for placing a mobile phone being formed between the second blocking plate and the first protrusion;
a first end of the supporting frame being connected to a bottom surface of the base, and a second end of the supporting frame being provided with a second protrusion, so that the supporting frame, the first blocking plate and/or the second blocking plate being able to support a laptop computer together.

2. The vertical stand for mobile terminals according to claim 1, wherein a height of the first blocking plate is greater than a height of the second blocking plate, and the height of the second blocking plate is greater than a height of the supporting frame.

3. The vertical stand for mobile terminals according to claim 1, wherein a first protecting cover is provided at a top end of the first blocking plate, and the first protecting cover has a first edge protecting layer fitted on a side face of the first blocking plate near the second blocking plate.

4. The vertical stand for mobile terminals according to claim 1, wherein a first non-slip pad is arranged on the bottom surface of the base.

5. The vertical stand for mobile terminals according to claim 1, wherein a first slide rail is provided on a face of the base in contact with the movable base, and a first slider is provided on a face of the movable base in contact with the base, the first slider and the first slide rail are slidably connected, so that a width of the clamping groove can be changed by adjusting a position of the movable base.

6. The vertical stand for mobile terminals according to claim 3, wherein a second protecting cover is provided at a top end of the second blocking plate, and the second protecting cover has a second edge protecting layer fitted on a side face of the second blocking plate near the first blocking plate.

7. The vertical stand for mobile terminals according to claim 6, wherein a first inclined surface is provided at a top end of the first protecting cover, and a second inclined surface is provided at a top end of the second protecting cover.

8. The vertical stand for mobile terminals according to claim 1, wherein the first protrusion has a second non-slip pad located on a side of the first protrusion near the second blocking plate.

9. The vertical stand for mobile terminals according to any of claims 1 to 8, wherein a shaft hole is provided on the first end of the supporting frame, and a first rotating shaft is provided on the bottom surface of the base, and the first end of the supporting frame is sleeved on the first rotating shaft through the shaft hole, so that the supporting frame can be extended from or retracted to the bottom surface of the base.

10. The vertical stand for mobile terminals according to claim 9, wherein the supporting frame comprises a first support, a second support, and a second rotating shaft, and the first support is movably connected with the second support through the second rotating shaft.

11. The vertical stand for mobile terminals according to any of claims 1 to 8, wherein the second end of the supporting frame is provided with an avoidance hole and a third rotating shaft, the third rotating shaft is located in the avoidance hole, and the second protrusion is movably connected with the third rotating shaft, so that the second protrusion can be received in or protruded from the avoidance hole.

12. The vertical stand for mobile terminals according to any of claims 1 to 8, wherein the second end of the supporting frame is provided with a third non-slip pad located on an upper surface of the supporting frame.

13. The vertical stand for mobile terminals according to any of claims 1 to 8, wherein a second slider is provided on the first end of the supporting frame, and a second slide rail is provided on the bottom surface of the base, the second slider is slidably connected with the second slide rail, so that the supporting frame can be extended from or retracted to the bottom surface of the base.

14. The vertical stand for mobile terminals according to any of claims 1 to 8, wherein a limiting bar is provided on the first end of the supporting frame, and a guiding hole is provide in the base, so that the supporting frame is able to be extended from or retracted into the guiding hole.

15. The vertical stand for mobile terminals according to claim 14, wherein an avoidance groove is provided on an edge at an opening of the guiding hole, so that the second protrusion is accommodated in the avoidance groove when the supporting frame is in a retracted state.

16. The vertical stand for mobile terminals according to any of claims 1 to 8, further comprising:
a hub, mounted on the base and positioned on a side of the first blocking plate away from the second blocking plate.

17. The vertical stand for mobile terminals according to claim 16, wherein the hub comprises a housing, a cover plate, a circuit board, and a plurality of female connectors, the housing is fixedly connected to the base, the cover plate covers on the housing, and the circuit board is mounted inside the housing, the plurality of female connectors are each in electrical connection with the circuit board, and a connecting terminal of each of the plurality of female connectors is exposed outside the housing.

18. The vertical stand for mobile terminals according to claim 17, wherein the plurality of female connectors include at least two of a USB interface, a video-graphics-array interface, a high-definition multimedia interface, a Type-c interface, a lightning interface, a secure digital card interface, a trans-flash (TF) card interface, and a Ethernet interface.

19. The vertical stand for mobile terminals according to claim 17, further comprising: an electrical mechanism, the electrical mechanism including a driving member and a transmission member, wherein a movable hole is provided in the base, the driving member is mounted in the housing, and one end of the transmission member is connected with the driving member, and the other end thereof passes through the movable hole and is connected to the movable base, such that the driving member can drive the second blocking plate of the movable base to move toward or away from the first blocking plate.
